## Europäisches Patentamt

## European Patent Office

## Office européen des brevets

(19)

(11) Numéro de publication: **0 121 463**
**B1**

(12) # FASCICULE DE BREVET EUROPÉEN

(45) Date de publication du fascicule du brevet:
02.08.89

(51) Int. Cl.⁴: **G 01 V 5/10,** G 01 N 23/203

(21) Numéro de dépôt: **84400551.2**

(22) Date de dépôt: **20.03.84**

(54) **Méthode et dispositif permettant d'obtenir des informations relatives à des matières organiques ou minérales susceptibles d'être contenues dans des formations géologiques.**

(30) Priorité: **05.04.83 FR 8305657**

(43) Date de publication de la demande:
**10.10.84 Bulletin 84/41**

(45) Mention de la délivrance du brevet:
**02.08.89 Bulletin 89/31**

(84) Etats contractants désignés:
**BE CH DE GB IT LI NL**

(56) Documents cité:
**FR-A-2 120 638**
**FR-A-2 424 551**
**US-A-3 665 195**
**US-A-4 317 993**

**CANADIAN JOURNAL OF PHYSICS, vol. 49, no. 2, 15 janvier 1971, pages 177-200; R.A. COWLEY et al.: "Inelastic scattering of thermal neutrons from liquid helium"**
**CANADIAN JOURNAL OF PHYSICS, vol. 51, no. 6, 15 mars 1973, pages 657-675; J.R.D: COPLEY et al.: "Crystal dynamics of rubidium. I. Measurements and harmonic analysis"**

(73) Titulaire: **INSTITUT FRANCAIS DU PETROLE, 4, Avenue de Bois- Préau, F-92506 Rueil- Malmaison Cédex (FR)**

(72) Inventeur: **Bienfait, Michel, 2, boulevard Agelasto, F-13009 Marseille (FR)**
Inventeur: **Durand, Bernard, 13, rue des Primevères, F-92500 Rueil Malmaison (FR)**
Inventeur: **Suzanne, Jean, 39, rue André Audoli "Castelroc", F-13010 Marseille (FR)**
Inventeur: **Ungerer, Philippe, 7, rue des Frères Lumière, F-92500 Rueil Malmaison (FR)**

EP 0 121 463 B1

## Description

La présente invention concerne une méthode et un dispositif permettant d'obtenir des informations relatives à une matière déterminée, organique ou minérale, susceptible d'être contenue dans des formations géologiques, et en particulier celles traversées par un forage. La présente invention permet, notamment, de détecter la présence de certaines matières dans des formations géologiques et éventuellement de doser ces matières.

Jusqu'ici la présence de certaines matières, contenues dans des formations géologiques, était indiquée par les résultats d'analyses effectuées sur des échantillons de ces formations géologiques, prélevés par des appareillages particuliers du type carottier, ou provenant des déblais recueillis au cours du forage de ces formations.

Ces analyses, qui sont par exemple des analyses chimiques ou encore des analyses des produits résultant de la pyrolyse ou de l'oxydation de l'échantillon, sont effectuées en surface et sont relativement longues à mettre en oeuvre, puisque les plus rapides nécessitent au moins une dizaine de minutes par échantillon.

L'art antérieur peut être illustré par les brevets français 2 120 638 et 2 424 551, américains 4 317 993 et 3 665 195 ainsi que par les articles suivants parus dans le "Canadian Journal of Physics":

- article de R.A. COWLY intitulé "Inelastic scattering of thermal neutrons from liquid helium" (Vol. 49, n° 2 du 15 janvier 1971, Ontario (CA), pages 177 à 200), et
- article de J.R.D. COPLEY intitulé "Crystal dynamics of rubidium. I. Measurements and harmonic analysis" pages 657 à 675.

L'expérience n° 906 327 mentionnée dans le rapport annuel 1980 de l'Institut Lave Langevin de Grenoble - France, sous le titre "Investigation of the vibrational state of butane adsorbed on graphite at lox and high energy transfers", a montré que le spectre de diffusion inélastique incohérente de neutrons interagissant avec une couche d'épaisseur déterminée de butane, adsorbé sur un support de graphite en CARBOPACK.B. (marque commerciale), présente des pics au voisinage de certains niveaux d'énergie parmi lesquels certains sont caractéristiques des vibrations du couple C - H, du couple C - C et d'un mouvement de balancement du groupe CH₃.

La présente invention, qui a pour but de permettre une détermination rapide de la présence de certaines matières dans les formations géologiques traversées par un forage, est basée sur le fait que les auteurs de la présente invention ont constaté des phénomènes semblables dans le spectre de diffusion inélastique incohérente de neutrons d'une formation géologique soumise a un flux de neutrons ayant un niveau d'énergie déterminés.

Il est possible, selon l'invention, d'identifier et/ou de doser rapidement certaines matières contenues dans les informations géologiques. Il est également possible d'obtenir d'autres informations concernant ces formations, par exemple leur densité en atome d'hydrogène.

Un appareillage permettant de faire des mesures sur des formations géologiques traversées par un forage a été conçu. Ces mesures sont avantageusement effectuées à différents niveaux du forage pour permettre de déterminer, en fonction de la profondeur et de façon pratiquement continue, les zones de terrain où la matière recherchée est présente.

L'expérience récente indiquée plus haut a été réalisée sur une matière déterminée, en l'occurence du butane, qui était adsorbée sur un support particulier de graphite en CARBOPACK.B. (marque commerciale) en formant à la surface de ce support une couche d'épaisseur connue avec précision.

De telles conditions n'existent pratiquement pas dans la nature et c'est le mérite des inventeurs d'avoir découvert qu'en soumettant un échantillon de formation géologique à un bombardement de neutrons ayant une énergie appropriée, généralement inférieure à 1 eV, le spectre de diffusion inélastique incohérente des neutrons interagissant avec la matière contenue dans l'échantillon présente des pics correspondant à des transferts d'énergie, la valeur des énergies transférées étant caractéristique de certaines matières contenues dans les formations géologiques. Ce transfert d'énergie s'effectue des neutrons incidents à certaines molécules des formations géologiques ou inversement.

Les inventeurs ont alors étudié les spectres de diffusion inélastique incohérente de divers échantillons géologiques dont la composition avait été déterminée par des procédés antérieurs et ont établi pour certaines matière susceptibles d'être contenue dans des formations géologiques, une ou des valeurs de référence des niveaux d'énergie pour lesquelles le spectre de diffusion inélastique présente des pertes d'énergie.

La méthode selon l'invention s'applique, avantageusement, aux matières organiques sous toutes les formes, les hydrocarbures, les minéraux, notamment les minéraux argileux, l'eau et d'une manière générale au matières hydrogénées.

En particulier, il est possible de caractériser les hydrocarbures et les matières organiques sédimentaires contenus dans un réservoir pétrolier ou plus généralement dans des roches sédimentaires. On ne sortira pas du cadre de la présente ivention en l'appliquant à la détection d'autres matériaux.

La présente invention propose de soumettre des formations géologiques à un bombardement de neutrons ayant une énergie déterminée, et de repérer dans le spectre de diffusion inélastique incohérente de l'énergie des neutrons renvoyée par les formations géologiques, les valeurs des domaines d'énergie pour lesquelles le spectre présente des pics.

Chaque pics correspond à un ensemble de neutrons diffusés ayant sensiblement la même énergie. Cette énergie est repérée par la position du pic dans le spectre. En comparant la valeur des énergies correspondant aux différents pics avec la valeur de l'énergie des neutrons incidents, on détermine les quantités d'énergies élémentaires le plus fréquemment transférées des neutrons à certaines molécules des formations ou inversement. Le rapprochement de ces quantités élémentaires transférées avec des valeurs de référence, permet de déduire des informations notamment qualitatives concernant les formations géologiques, telles la nature possible de certaines matières contenues dans ces formations. Des essais ont été effectués en utilisant des valeurs de référence voisines de 175 meV et/ou 370 meV. L'étude de l'importance ou intensité des pics, et éventuellement du pic de diffusion élastique incohérente, permet de confirmer les renseignements qualitatifs, dont il a été question précédemment, et/ou d'obtenir des informations quantitatives concernant certaines au moins des matières détectées, telles que les teneurs relatives ou absolues de matières, et d'avoir des renseignements concernant la densité en protons, ou atomes d'hydrogène, contenus dans les formations géologiques.

Selon un mode particulier de mise en oeuvre de l'invention, la présence d'une matière dans les formations géologiques peut être déduite de l'analyse du spectre de diffusion inélastique ayant une ou plusieurs valeurs d'énergie déterminées correspondant aux valeurs de référence établies pour cette matière.

L'invention propose également un dispositif de mise en oeuvre de la méthode pour détecter la présence de certaines matières dans des formations géologiques traversées par un sondage.

Ainsi, la présente invention propose une méthode pour obtenir des informations géologiques et suivants laquelle:

- on soumet ces formations géologiques à au moins un flux de neutrons, dits incidents, ayant une énergie sensiblement déterminée,
- on établit, au moins partiellement, le spectre de diffusion inélastique incohérente des neutrons diffusés résultant de l'interaction des neutrons incidents avec la matière contenue dans les formations géologiques et,
- on déduit de ce spectre certaines des quantités d'énergie fréquemment transférees entre les neutrons incidents et des molécules des matières contenues dans les formations, ou vice versa.

Il est possible selon une variante de la méthode de soumettre les formations géologiques à plusieurs flux de neutrons incidents, dont chacun a une énergie sensiblement déterminée.

Selon une autre variante, on connaît au moins un ensemble, dit de référence, comportant au moins une valeur d'énergie transférée, cet ensemble étant caractéristique de l'une au moins des informations recherchée concernant des matières susceptibles d'être contenues dans les formations géologiques, et on détermine ladite information lorsque l'on déduit, du spectre, des valeurs d'énergie transférées, sensiblement égale aux valeurs de l'ensemble de référence.

Il est possible, selon l'invention, de produire un signal de mesure, représentatif du flux de neutrons, correspondant au moins à des valeurs d'énergie transférées de l'ensemble de référence.

On peut également comparer respectivement, la valeur desdits signaux à des seuils prédéterminés et produire un signal significatif de l'information qui est caractérisée par l'ensemble de référence, lorsque les valeurs desdits signaux de mesure sont respectivement supérieures à celles desdits seuils.

Les différents signaux peuvent être enregistrés en fonction du niveau du forage où sont effectuées les mesures.

Les informations recherchées peuvent concerner la présence d'au moins une matière dans les formations géologiques.

Selon une variante de la méthode, on mesure l'intensité des pics du spectre correspondants aux différentes quantités d'énergies transférées. Il est alors possible, sil'on connaît au moins un ensemble, dit de référence comportant au moins une valeur d'énergie transférée, cet ensemble ainsi que l'intensité des pics du spectre, correspondant à au moins certaines valeur dudit ensemble de référence, étant caractéristique de l'une au moins des informations recherchée concernant des matières contenues dans les formations géologiques, de déduire l'information cherchée par comparaison des valeurs d'énergie effectivement transférées avec celle de l'ensemble de référence et par l'étude de l'intensité des pics du spectre correspondant au moins à certaines des valeurs d'énergie effectivement transférées.

Les informations cherchées peuvent concerner la présence et/ou la teneur d'au moins une matière dans la formation géologique, de même qu'elles peuvent concerner la présence de plusieurs matières dans les formations géologique et/ou leur teneur relative.

Il est avantageux, suivant certaines variantes de la méthode selon l'invention, de ne considérer que les transferts d'énergie négatifs, c'est-à-dire ceux correspondant 3 une perte d'énergie des neutrons incidents, ceux-ci étant plus probables, du moins, dans certaincs conditions, notamment de température.

L'énergie déterminée d'un flux de neutrons incidents sera avantageuement légèrement supérieure à la valeur la plus grande des énergies négatives transférées, c'est-à-dire à la plus grande perte d'énergie des neutrons incidents qu'est sensé détecter le flux, ceci notamment pour obtenir une bonne résolution de la mesure.

Selon une variante de la méthode, le flux total diffusé par les forations rapporté au flux de neutrons incidents permet de déduire des informations concernant ces formations, notamment leur teneur en protons.

Les différentes variantes proposées précédemment peuvent être prises séparément ou en combinaison entre elles, du moins si elles sont compatibles.

La présente invention propose également un dispositif permettant l'obtenir certaines informations concernant au moins une matière contenue dans des formations géologiques traversées par un forage. Ce dispositif, comportant une sonde qui peut être introduite dans le forage, fixée à l'extrémité d'un câble de manoeuvre, et des moyens de transmission des signaux délivrés par la sonde, et comportant au moins une cellule de mesure comprenant:

- une source capable de produire un flux de neutrons,
- un monochromateur capable de réfléchir vers les formations géologiques les seuls neutrons qui ont une énergi de valeur déterminée ($E_{0a}$, $E_{0c}$) et
- des moyens de détection adaptés à produire un signal de mesure représentatif du flux de neutrons diffusés par les formations géologiques et dont l'énergie, ($E_{sa}$, $E_{sc}$) diffère de ladite énergie de valeur déterminée ($E_{0a}$, $E_{0c}$) d'unc quantité d'énergic transférée ($\Delta E_a$, $\Delta E_c$).

La source peut comporter un émetteur de neutrons et un thermaliseur qui, à la réception des neutrons émis par l'émetteur, produit un flux de neutrons ayant une énergie plus faible.

L'émetteur de neutrons peut être un émetteur au Californium 252 et le thermaliseur peut être composé d'oxyde de deuterium.

Les moyens de détection peuvent comporter un analyseur et un détecteur de neutrons, l'analyseur étant adapté à réfléchir vers le détecteur les neutrons diffusés par les formations géologiques dont l'énergie ($E_{sa}$, $E_{sc}$) diffère de ladite énergie de valeur déterminée ($E_{0a}$, $E_{0c}$) d'une quantité d'énergie tranférée ($\Delta E_a$, $\Delta E_c$).

Les moyens de détection peuvent également comporter un filtre et un détecteur de neutrons, le filtre étant adapté à ne laisser passer en direction du détecteur que les neutrons diffusés par les formations géologiques dont l'énergie ($E_{sa}$, $E_{sc}$) est sensiblement égal à ladite valeur d'énergie déterminée $E_{0a}$ modifiée de la quantité d'énergie transférée ($\Delta E_a$, $\Delta E_c$).

Le monochromateur et l'analyseur sont constitués éventuellement par des cristaux taillés selon un plan déterminé et respectivement placés par rapport à ladite source et audit détecteur dans des positions permettant une réflexion de Bragg suivant un angle déterminé.

Les cristaux peuvent être mobile autour d'un axe permettant la modification de l'angle de réflexion de Bragg.

Selon une variante du dispositif, la source émet ses neutrons dans une direction sensiblement perpendiculaire à l'axe de la sonde.

Le dispositif selon l'une des deux variantes précédentes, qui est destiné à obtenir des informations relatives à une matière susceptible d'être contenue dans les formations et pour laquelle on connaît au moins une valeur de référence d'énergie transférée lors de l'interaction des neutrons avec cette même matière, peut comporter au moins:

- une première cellule de mesure émettant des neutrons ayant une énergie déterminée et détectant des neutrons diffusés dont l'énergie diffère de ladite énergie déterminée d'une quantité sensiblement égale à la valeur de référence d'énergie transférée,
- une seconde cellule de mesure émettant et détectant des neutrons dont l'énergie a une valeur pour laquelle ledit spectre de diffusion de la matière ne révéle pratiquement pas d'absorbtion d'énergie.

Le dispositif selon l'invention peut comporter des moyens de traitement des signaux délivrés par les deux cellules de mesure, et est caractérisé en ce que ces moyens de traitement comportent un circuit différentiel délivrant un signal proportionnel à la différence des signaux délivrés par les cellules de mesure et un circuit comparateur délivrant un signal significatif de la présence de la matière recherchée dans les formations géologiques lorsque le signal délivré par le circuit différentiel est supérieur à une valeur seuil prédéterminée.

La cellule peut être portée par une partie de mesure adaptée à venir en contact avec les formations géologiques pendant les mesures.

Le dispositif, selon l'invention peut être équipé d'au moins un détecteur, adapté à mesurer l'un au moins des flux ayant une énergie déterminée.

Le dispositif, selon l'invention, peut être également équipé d'au moins un détecteur adapté à mesurer le flux diffusé par les fonctions géologiques.

L'invention pourra être bien comprise et tous ses avantages apparaîtront clairement à la lecture de la description qui suit illustrée par les figures annexées dans lesquelles:

- les figures 1A et 1B illustrent schématiquement les principes sur lesquels s'appuie la présente invention,
- la figure 2 représente schématiquement une sonde de mesure selon l'invention,
- la figure 3 montre un premier mode de réalisation d'une cellule de mesure,
- la figure 4 illustre le traitement des signaux délivrés par les cellules de mesure,
- la figure 5 illustre un second mode de réalisation d'une cellule de mesure,
- les figures 6 et 7 représentent d'autres mode de réalisations d'une cellule de mesure et,
- les figures 8 et 9 schématisent des variantes de réalisation de la sonde de mesure selon l'invention.

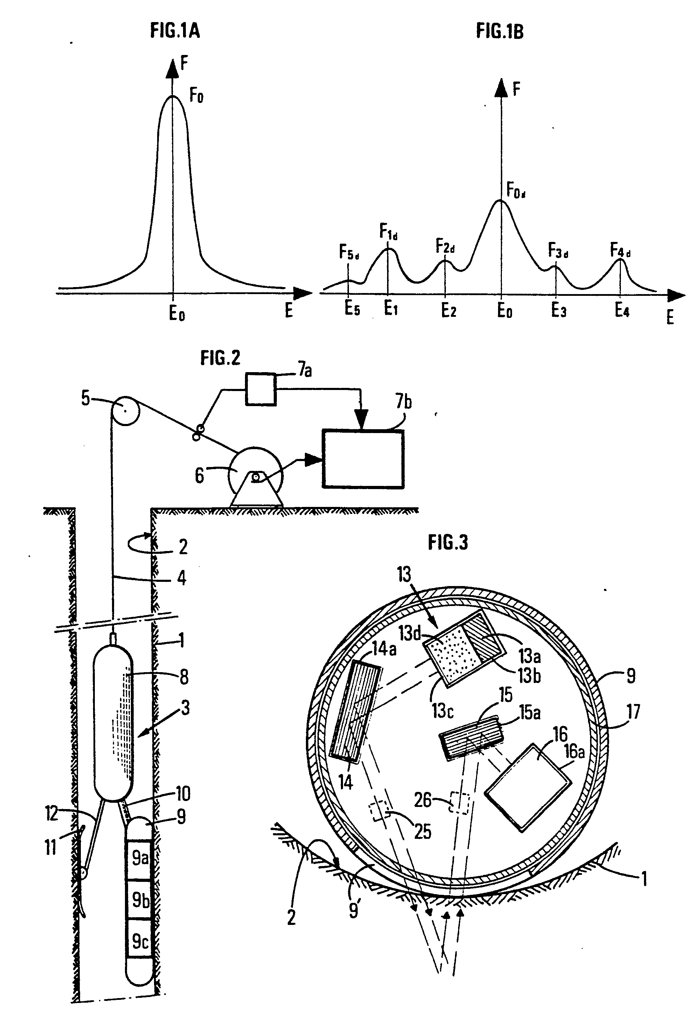

Sur les figures 1A et 1B, l'abscisse représente l'énergie E des neutrons, et l'ordonnée le flux F des neutrons.

Ces deux figures ne sont données que pour faciliter la compréhension de l'invention, de plus, les échelles respectives de ces deux figures ne se correspondent pas.

La figure 1A représente le spectre en énergie des neutrons envoyés vers les formations géologiques à explorer, ces neutrons seront dits incidents. La figure 1B représente le spectre des neutrons renvoyés par ces formations, ces neutrons seront dits diffusés. Les neutrons émis vers les formations sont sensiblement monochromatiques, c'est-à-dire sensiblement centrés autour d'un même niveau d'énergie $(E_0)$.

La valeur maximum du flux des neutrons incidents est représentée par la lettre $F_0$.

Les valeurs maximales des pics de flux des neutrons diffusés sont notées $F_{0d}$, $F_{1d}$, $F_{2d}$, $F_{3d}$, $F_{4d}$ et $F_{5d}$, et correspondent respectivement aux niveaux d'énergie notés $E_0$, $E_1$, $E_2$, $E_3$, $E_4$ et $E_5$.

Ce sont les valeurs des énergies élémentaires transférées entre les neutrons incidents et les formations géologiques qui fournissent des informations concernant ces formations géologiques. Ainsi, ce qui importera dans l'exemple schématique des figures 1A et 1B, sera les valeurs suivantes:

$$\Delta E_1 = E_1 - E_0$$
$$\Delta E_2 = E_2 - E_0$$
$$\Delta E_3 = E_3 - E_0$$
$$\Delta E_4 = E_4 - E_0 \text{ et}$$
$$\Delta E_5 = E_5 - E_0$$

Les informations quantitatives, relatives à certains éléments des matières contenues dans les formations, pourront être obtenues par l'étude comparative de certaines des valeurs maximun des flux $F_{id}$ et $F_0$ et/ou de la forme de certains des pics, celle-ci permettant notament d'intégrer le flux au voisinage d'un pic.

Les différentes grandeurs données précédemment pourront être normalisées, relativement au flux des neutrons incidents.

La comparaison de l'intégrale du flux incident à l'intégrale de la totalité du flux diffusé peut permettre de déterminer la densité des formations en atome d'hydrogène.

Le nombre de pics à prendre en considération variera en fonction des informations recherchées. Ainsi, il est possible selon certains modes de réalisation de l'invention, de ne considérer qu'un ou deux pics.

Il convient de noter que généralement à certains niveaux de température, les pics correspondant à des pertes d'énergie des neutrons incidents sont plus importants et que par conséquent il est avantageux, dans certaines conditions, de travailler uniquement avec le spectre de perte d'énergie des neutrons incidents.

La figure 2 représente schématiquement un premier mode de réalisation d'un dispositif selon l'invention, utilisé pour détecter la présence de certaines matières dans des formations géologiques 1 traversées par un sondage 2.

Ce dispositif comporte une sonde, désignée dans son ensemble par la référence 3, qui est suspendue à l'extrémité d'un câble porteur 4 dans lequel sont par exemple incorporés des conducteurs électriques. Ces conducteurs servent à l'alimentation de la sonde en énergie électrique et à la transmission de signaux électriques entre la sonde et l'installation de surface.

Le câble 4 passe sur une poulie de renvoi 5 et s'enroule sur le tambour d'un treuil 6. Des moyens 7a mesurent le défilement du câble en surface pour déterminer la position de la sonde dans le puits. Ces moyens 7a délivrent un signal représentatif de la position de la sonde dans le puits 2. Ce signal est transmis à un appareillage 7b. Les conducteurs électriques du câble 4 sont reliés en surface à l'appareillage 7b où en fonction de la postion de la sonde 3 dans le puit 2, les signaux délivrés par la sonde sont enregistrés et/ou visualisés et éventuellement traités.

La sonde 3 comporte un corps 8 dans lequel sont logés les circuits électroniques nécessaires au fonctionnement de la sonde et à la transmission des signaux. La sonde comporte également un patin de mesure 9 relié au corps 8 par un bras articulé 10 permettant de placer le patin de mesure au contact de la paroi du puit. Un second patin 11, fixé au corps de sonde par un bras articulé 12, est prévu dans une position diamétralement opposée au patin de mesure 9. Le corps de sonde 8 est éventuellement équipé de dispositifs centreurs non représentés.

Le patin de mesure 9 comporte au moins une cellule de mesure ou de détection d'un matière susceptible d'être contenue dans les formations géologiques 1.

Dans le cas représenté sur la figure 1, à titre d'exemple non limitatif, le patin de mesure 9 est équipé de trois cellules de mesure 9a, 9b, 9c.

La figure 3 montre, en coupe selon un plan perpendiculaire à l'axe du patin de mesure, un premier mode de réalisation d'une cellule de mesure.

Cette cellule de mesure comporte:

- une source 13 émettant des neutrons dans une direction sensiblement perpendiculaire à l'axe de la sonde,
- un premier monochromateur de neutrons, par exemple un cristal taillé en réflecteur de Bragg 14 qui renvoie certains des neutrons émis par la source 13 en direction des formations géologiques 1,
- un analyseur 15, qui peut être également un monochromateur de neutrons, formé par un cristal taillé qui reçoit des neutrons émis par les formations géologiques et renvoie certains d'entre eux dans une direction déterminée, et
- un détecteur de neutrons 16, qui capte les neutrons réfléchis par l'analyseur 15 dans une direction scnsiblement perpendiculaire à l'axe de la sonde.

La source de neutrons 13 est composée d'un émetteur de neutrons 13a du type de celles commercialisées par le Commissariat à l'Energie Atomique. Cet émetteur est par exemple un émetteur de neutrons au radium-beryllium, ou antimoine-beryllium ou californium 252. L'émetteur 13a est placé dans un boîtier 13b constitué en un matériau absorbant les neutrons, par exemple en cadmium, et ayant une portion de paroi ou "fenêtre" 13c permettant le passage des neutrons dans une direction sensiblement perpendiculaire à l'axe du patin 9. Cette "fenêtre" est par exemple constituée en acier inoxydable ou en aluminium. Entre la "fenêtre" 13c et l'emetteur 13a est interposé un produit ralentisseur de neutrons 13d tel que, par exemple, de l'oxyde de deutérium $D_2O$ (eau lourde) ou du graphite qui, à la réception du flux de neutrons produits par l'émetteur 13a, émet un flux de neutrons parmi lesquels certains ont l'énergie qui a été choisie pour le bombardement de la cible.

La source 13 ainsi constituée émet un flux de neutrons ayant par exemple un taux de neutrons d'au moins $10^8$ par seconde.

Le premier réflecteur de Bragg 14 est placé sur le trajet des neutrons émis par la source 13 et renvoie vers les formations géologiques 1 un flux de neutrons dont l'énergie est choisie de préférence en relation avec l'une des valeurs correspondant au matériau dont on désire détecter la présence dans les formations géologiques. Ainsi, comme il a déjà été dit, ce premier réflecteur de Bragg est un monochromateur qui sélectionne les neutrons émis par la source 13 en ne réfléchissant, vers les formations géologiques, que les neutrons qui ont un certain niveau d'énergie. Ce monochromateur est par exemple un cristal taillé suivant un plan permettant une réflexion de Bragg bien déterminée qui correspond à l'énergie des neutrons que l'on désire sélectionner. Ce monochromateur peut être par exemple constitué par un cristal de cuivre taillé, notamment suivant l'un des plans (111), (200), (220) ou (331) ou un cristal de silicium taillé suivant l'un des plans (111) ou (311) ou encore du graphite pyrolitique.

La définition des plans de taille est donnée conformément aux tables internationales de cristallographie.

Ce monocromateur est placé dans un boîtier de protection 14a par exemple en acier inoxydable ou en aluminium.

Le second réflecteur de Bragg 15 est placé en dehors du trajet suivi par les neutrons émis par la source 13 et réfléchis par le premier réflecteur de Bragg 14. Il sélectionne les neutrons diffusés par les formations géologiques 1 en ne réfléchissant que ceux dont l'énergie diffère de l'énergi, des neutrons émis d'une valeur caractéristique de la matière recherchée.

Cet analyseur peut être constitué par un cristal taillé suivant un plan permettant une réflexion de Bragg bien déterminée comme par exemple un cristal de germanium taillé suivant le plan (220) ou (111), ou un cristal de zinc taillé suivant son plan de base (002). Cet analyseur est protégé par un boîtier 15a par exemple en acier inoxydable ou en aluminium.

Le détecteur 16 peut être un détecteur de neutrons de tout type connu, comme par exemple un compteur au bore, un scintillateur au bore, un détecteur au lithium 6, ou un compteur à hélium $He^3$.

Ce compteur est placé dans un boîtier métallique 16a avec son alimentation et délivre un signal électrique représentatif du flux de neutrons diffusé reçu par l'analyseur.

L'ensemble de mesure décrit ci-dessus est placé dans un boîtier étanche 17 résistant à la pression et constitué par exemple en acier inoxydable ou en aluminium.

Le boîtier étanche 17 est placé dans le patin 9 qui est constitué par une enveloppe étanche métallique par exemple en acier inoxydable ou en aluminium. De préférence un écran absorbant les neutrons, par exemple un écran au cadmium, protège une partie de la surface intérieure du patin 9 en laissant libre une portion de cette paroi interposée sur le trajet des neutrons réfléchis par le réflecteur de Bragg 14 et sur le trajet des neutrons diffusés par les formations géologiques en direction de l'analyseur 15, cette portion de paroi 9' constituant une "fenêtre" pour le passage des neutrons.

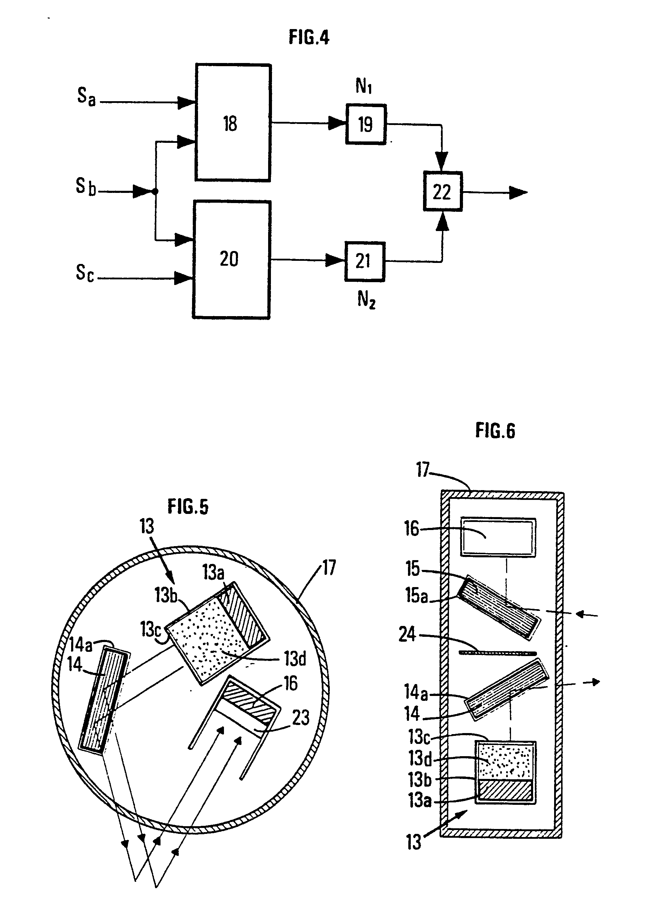

Le fonctionnement de la sonde est indiqué ci-dessous en se référant aux figures 2 et 4.

On suppose tout d'abord que des expériences préalables ont permis de connaître le spectre de diffusion inélastique incohérente de neutrons interagissant avec une matière M identifiée et susceptible d'être contenue dans les formations géologiques. On suppose également que ce spectre comporte au moins deux pics correspondant à deux valeurs d'énergie transférée $\Delta Ea$ et $\Delta Ec$, par exemple 175 meV et 370 meV, la connaissance de ces deux valeurs étant jugée suffisante pour caractériser la matière M telle de l'huile lourde, ou plus généralement des hydrocarbures ou d'autres matières organiques sédimentaires.

La sonde 3 est alors équipée de trois cellules de mesure 9a, 9b et 9c. La première 9a est réglée pour émettre vers les formations géologiques un flux de neutrons d'énergie $E_{0a}$ et pour détecter dans le flux de neutrons diffusés par les formations 1, ceux qui ont une énergie:

$$E_{1a} = \Delta E_a + E_{0a}.$$

Une seconde cellule de mesure par exemple la cellule 9c, est réglée pour émettre vers les formations géologiques un flux de neutrons d'énergie $E_{0c}$ et pour détecter dans le flux de neutrons diffués par les formations géologiques 1 ceux qui ont une énergie $E_{1c} = \Delta E_c + E_{0c}$.

La troisième cellule de mesure 9b est réglée pour détecter les neutrons diffusés par les formations géologiques 1, qui ont transféré une énergie $\Delta E_b$, cette valeur n'étant caractéristique d'aucune des matières contenues dans les formations. Elle est destinée à permettre l'évaluation du bruit de fond.

La sonde 3 est alors introduite dans le puits jusqu'au niveau le plus bas où l'on désire effectuer les mesures. On actionne la sonde pour placer le patin 9 en contact avec la paroi du puits.

Les mesures sont effectuées par les cellules de mesure 9a, 9b et 9c.

Les cellules 9a 9b et 9c délivrent des signaux de mesure $S_a$, $S_b$ et $S_c$ respectivement proportionnels au flux de neutrons captés par les détecteur ayant une énergie $\Delta E_a$, $\Delta E_b$ et $\Delta E_c$.

Les signaux sont transmis à l'appareillage électronique, par exemple contenu dans le corps 8 de la sonde, qui permet de corriger les signaux $S_a$ et $S_c$ pour tenir compte d'un signal parasite ou bruit de fond. Pour cela, les signaux $S_a$ et $S_b$ sont appliqués à l'entrée d'un circuit 18 qui délivre sur sa borne de sortie un signal proportionnel à la différence des signaux $S_a$ et $S_b$. Ce signal est alors transmis à un circuit à seuil 19 préréglé à une valeur N1 et qui délivre un premier signal indicateur permettant de savoir si le signal délivré par le circuit 18 est inférieur ou supérieur au seuil.

De la même manière les signaux $S_b$ et $S_c$ sont appliqués à un circuit 20 qui délivre sur sa borne de sortie un signal proportionnel à la différence des signaux $S_b$ et $S_c$. ce signal est alors transmis à un circuit à seuil 21 préréglé à une valeur N2 .

Les signaux indicateurs sont appliqués à un circuit d'analyse 22 qui délivré un signal lorsque simultanément les signaux délivré par les circuits 18 et 20 sont respectivement supérieurs aux seuils N1 et N2, ce signal indiquant la présence de la matière M dans les formations géologiques.

Le signal délivré par le circuit 22 transmis en surface par les conducteurs du câble 4 et enregistré par l'appareillage 7 en fonction de la profondeur où se trouve la sonde.

Par traction sur le câble 4 la sonde est remontée vers la surface tout en effectuant en continu les mesures indiqués ci-dessus.

Il est également possible de disposer d'une cellule de détection de bruit de fond par cellule de mesure d'énergie transférée. Les cellules de détection de bruit de fond peuvent ne comporter qu'un analyseur et qu'un détecteur.

L'exemple de traitement, correspondant aux schéma de la figure 2, est un traitement simple permettant de confirmer ou d'infirmer la présence d'une matière dans les formations géologiques. On ne sortira pas du cadre de la présente invention en utilisant d'autres types de traitement. Il est possible selon l'invention d'utiliser des traitements qui tiennent compte, entre autre, de l'intensité des différents signaux délivrés par les détecteur, ceci notamment afin d'obtenir des informations quantitatives concernant certaines matières contenues dans les formations géologiques. Dans ce cas il est possible d'utiliser le premier procédé de traitement (figure 4) pour déclencher, en cas de détection d'une matière, un autre procédé de traitement permettant d'obtenir des informations quantitatives relatives aux formations.

Il peut être important, dans certains cas, notamment pour l'obtention d'informations quantitatives, de connaître le flux des neutrons émis vers les formations géologiques. Ce flux peut être déterminé par une connaissance des caractéristiques de la sources de neutrons et du monochromateur, toutefois, afin de s'affranchir des variations éventuelles de ces caractéristiques dans le temps, il est possible d'utiliser un détecteur 25, représenté en pointillés à la figure 3, qui permet de mesurer le flux émis par le monochromateur 14.

Il est avantageux d'utiliser un détecteur 26, représenté en pointillés à la figure 3, pour mesurer un flux caractéristique de tous les neutrons diffusés par les formations. Cette mesure permet de normaliser le flux mesuré par le détecteur 16 et d'obtenir des informations quantitatives, relatives aux formations.

Ce détecteur 26 peut être utilisé dans un premier temps pour permettre la détection rapide des protons, quitte à fair, un comptage plus long dans les zones intéressantes pour mesurer les quantités d'énergie tranférées caractéristiques des matières recherchées.

Bien entendu, le traitement des signaux $S_a$, $S_b$ et $S_c$ peut être effectué en surface en temps réel ou après enregistrement des valeurs de ces signaux en fonction de la profondeur de la sonde dans le puits 2.

De plus, le patin de mesure pourra être équipé d'un nombre suffisant de cellules de mesure pour analyser simultanément les niveaux d'énergie caractéristiques de plusieurs matériaux que l'on désire détecter dans les formations géologiques 1.

La figure 5 représente un autre mode de réalisation d'un cellule de mesure. Cette cellule de mesure comporte une source 13 et un monochromateur 14 identiques à ceux indiqués sur la figure 2.

Dans ce mode de réalisation le détecteur 16 compte les neutrons fusés par les formations géologiques et qui ont traversé un filtre au béryllium 23 interposé entre le détecteur 16 et les formations géologiques soumises au bombardement des neutrons réfléchis par le monochromateur 14. Le filtre de béryllium est un filtre passe bas pour les neutrons. Il ne laisse passer que les neutrons ayant une énergie inférieure à, approximativement, 4 meV. Ainsi si la cellule de la figure 5 est destinée à mesurer le flux de neutrons ayant transféré une énergie $\Delta E$, l'énergie E des neutrons émis par le monochromateur 14 devra être comprise entre $\Delta E$ et $\Delta E + 4$ meV.

Bien entendu, il est possible d'utiliser un autre filtre. Il conviendra alors que les neutrons émis par la cellule vers la formation aient une énergie déterminée à partir des caractéristiques du filtre utilisé.

Le mode de réalisation décrit en relation avec la figure 5 sera en particulier mis en oeuvre pour le transfert d'énergie séłevées, généralement supérieures à 50 meV et de préférence comprises entre 50 meV et 600 meV.

La figure 6 représente une première variante de réalisation de la cellule de mesure représentée sur la figure 2.

Selon ce mode de réalisation, la source émettrice de neutrons 13 est disposée pour émettre son flux de neutrons dans une direction parallèle à l'axe de la sonde.

Le monochromateur 14 sélectionne les neutrons ayant une énergie déterminée $E_6$ et les réfléchit vers les formations géologiques. Les neutrons diffusés par ces formations géologiques qui atteignent l'analyseur 15 sont sélectionnés et réfléchis dans une direction parallèle à l'axe de la sonde vers le détecteur 16. Un écran 24 absorbant les neutrons est interposé entre la source 13 et le capteur 16. Cet écran est, par exemple, constitué en cadmium et empêche que des neutrons émis par la source 13 n'atteignent directement le capteur 16.

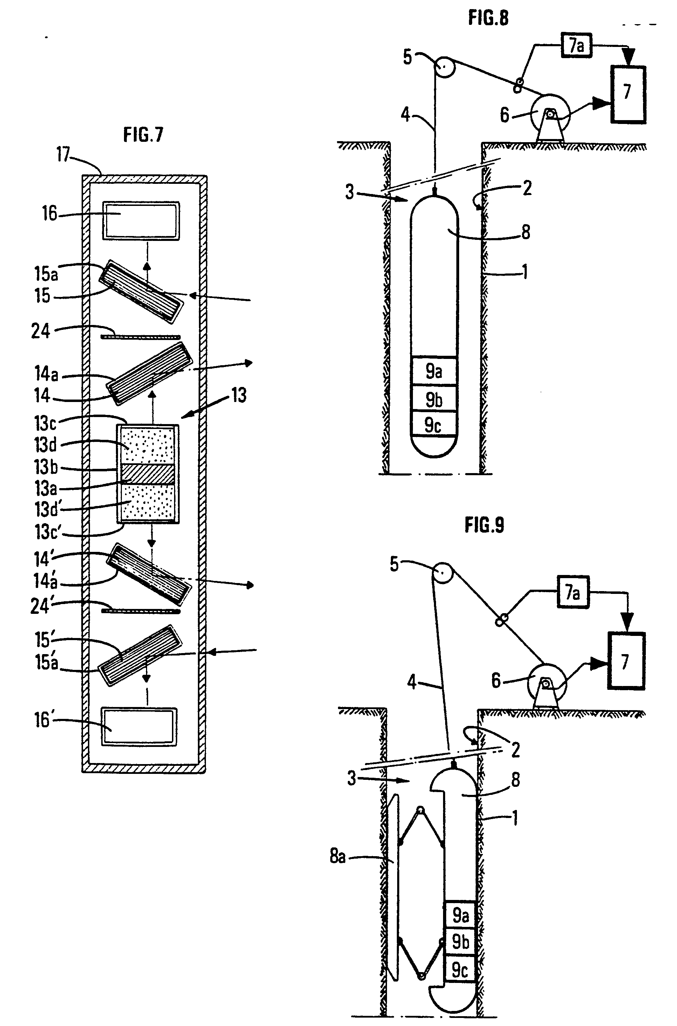

La figure 7 représente une autre variante de réalisation qui utilise une seule source 13 émettant dans deux dirrections opposées.

La partie supérieure de cette cellule de mesure est semblable à la cellule de mesure décrite sur la figure 6 et comporte un monochromateur 14, un analyseur 15 et un détecteur 16 coopérant pour analyser les neutrons diffusés par la formation géologique et ayant transféré une certaine quantité d'énergie $\Delta E6$.

La partie inférieure de la cellule de mesure comporte un monochromateur 14, un analyseur 15 et un capteur 16 coopérant pour analyser les neutrons diffusés par la formation géologique et ayant transféré une énergie $\Delta E'6$.

Bien entendu, il sera possible dans les modes de réalisation illustrés par la figure 6 de remplacer les capteurs 16 et l'analyseur 15 associé par un capteur associé à un filtre, comme indiqué sur la figure 5, le capteur étant alors orienté pour recevoir directement à travers un filtre 23 les neutrons diffusés par les formations géologiques. Il en est de même pour la figure 7.

Selon une autre variante de réalisation, il sera possible par rotation autour d'un axe de modifier la position du monochromateur et de l'analyseur par rapport à la source de neutrons et au capteur respectivement, de façon à modifier l'angle de réflexion de Bragg et donc le niveau d'énergie des neutrons sélectionnés. Dans ces conditions, une même cellule de mesure peut être utilisée pour analyser à différents niveaux d'énergie, le spectre de diffusion inélastique incohérente des neutrons interagissant avec la matière contenue dans les formations géologiques.

D'autres modifications pourront être apportées sans pour autant sortir du cadre de la présente invention.

En effet, dans ce qui précède on a représenté une sonde pour laquelle les ensembles de mesure sont portés par un patin de mesure qui, lors du fonctionnement de la sonde, est en contact avec les formations géologiques. Toutefois, et en particulier pour les forages de petit diamètre il est possible de prévoir une sonde dont le corps est équipé des différentes cellules de mesure $9_a$, $9_b$,.... comme le représente la figure 8. Dans ce cas les mesures effectuées tiennent compte de la présence du liquide qui remplit généralement le forage 2.

Il est également possible de prévoir le décentrement dans le forage du corps de sonde 8 équipé des cellules de mesure grâce à une partie mobile de la sonde, telle qu'un patin de décentrement $8_a$ (figure 9). Dans ce cas, les cellules de mesure sont en contact avec la paroi du puits et le liquide remplissant le forage n'affecte pratiquement pas les mesures.

Les analyseurs peuvent être remplacés par des appareillages mettant en oeuvre la méthode "de temps de vol" qui est une méthode connue et qui, par conséquent, ne sera pas décrite ici.

De bons résultats ont été obtenus en émettant des flux de neutrons ayant une énergie déterminée comprise entre 10 et 500 meV.

**Revendications**

1. Méthode pour obtenir des informations concernant au moins une matière contenue dans des formations géologiques et suviant laquelle:
- on soumet une partie desdites formations géologiques à au moins un flux de neutrons, dits incidents, ayant une énergie sensiblement déterminée,
- on établit au moins partiellement le spectre de diffusion inélastique incohérente des neutrons diffusés résultant de l'intération des neutrons incidents avec ladite partie desdites formations géologiques, et
- on déduit de ce spectre certaines des quantités d'énergie fréquemment transférées entre les neutrons incidents et des molécules des matières contenues dans ladite partie desdites formations, ou vice versa.

2. Méthode selon la revendication 1, caractérisée en ce que le flux total diffusé par ladite partie desdites formations rapporté au flux de neutrons incident permet de déduire des informations concernant lesdites formations.

3. Méthode selon l'une des revendications précédentes, caractérisée en ce qu'on ne considère que les transferts d'énergie négatifs, c'est-à-dire ceux correspondant à une perte d'énergie des neutrons incidents.

4. Méthode selon l'une des revendications précédentes, caractérisée en ce que l'on soumet ladite partie desdites formations géologiques à plusieurs flux de neutrons incidents dont chacun a une énergie sensiblement déterminée.

5. Méthode selon l'une des revendications 1 à 4, caractérisée en ce qu'on connaît au moins un ensemble, dit de référence comportant au moins une valeur d'énergie transférée, cet ensemble étant caractéristique de l'une au moins des informations recherchées concernant des matières contenues dans les formations géologiques, et en ce qu'on détermine ladite information en déduisant du spectre des valeurs d'énergie transférées sensiblement égale aux valeurs de l'ensemble de référence.

6. Méthode selon la revendication 5, caractérisée en ce que l'ensemble de référence comporte au moins une valeur d'énergie transférée voisine de 175 meV ou de 370 meV.

7. Méthode selon la revendication 5, caractérisée en ce que l'on produit un signal de mesure représentatif du flux de neutrons correspondant aux moins à des valeurs d'énergie transférées de l'ensemble de référence.

8. Méthode selon la revendication 7, caractérisée en ce que l'on compare respectivement la valeur desdits signaux à des seuils prédéterminés, et en ce qu'on produit un signal significatif de l'information caractérisée par ledit ensemble de référence lorsque les valeurs desdits signaux de mesure sont respectivement supérieures à celles desdits seuils.

9. Méthode selon la revendication 6, caractérisée en ce qu'on enregistre lesdits signaux en fonction du niveau du forage où sont effectuées les mesures.

10. Méthode selon l'une des revendications précédentes, caractérisée en ce que l'une au moins des informations recherchées concerne la présence d'au moins une matière dans les formations géologiques.

11. Méthode selon l'une des revendications 1 à 4, caractérisée en ce que l'on mesure l'intensité des pics du spectre correspondants aux différentes quantités d'énergie transférées.

12. Méthode selon la revendication 1 caractérisée en ce qu'on connaît au moins un ensemble dit de référence comportant au moins une valeur d'énergie transférée, cet ensemble ainsi que l'intensité des pics du spectre correspondants à au moins certaines valeurs dudit ensemble de référence étant caractéristique de l'une au moins des informations recherchées concernant des matières contenues dans les formations géologiques et en ce qu'on déduit l'information cherchée par comparaison des valeurs d'énergie effectivement transférées avec celle de l'ensemble de référence et par l'étude de l'intensité des pics du spectre correspondant au moins à certaines des valeurs d'énergie effectivement transférées.

13. Méthode selon l'une des revendications 11 ou 12, caractérisée en ce que l'une au moins des informations recherchées concerne la présence et/ou la teneur d'au moins une matière dans la formation géologique.

14. Méthode selon l'une des revendications 11 ou 12, caractérisée en ce que l'une au moins des informations recherchées concerne la présence de plusieurs matières dans les formations géologiques et leur teneur relative.

15. Méthode selon l'une des revendication précédentes, caractérisée en ce que le niveau de l'énergie déterminée d'un flux de neutrons incidents est légèrement supérieur à la valeur la plus grande des énergies négatives transférées, c'est-à-dire à la plus grande perte d'énergie des neutrons incidents qu'est sensé détecter ce flux.

16. Dispositif pour obtenir certaines informations concernant au moins une matière contenue dans des formations géologiques traversées par un forage, ce dispositif comportant une sonde qui peut être introduite dans le forage, fixée à l'extrémité d'un câble de manoeuvre et des moyens de transmission des signaux délivrés par la sonde, et comportant au moins une cellule de mesure ($9_a$, $9_c$) comprenant:
- une source (13) capable de produire un flux de neutrons,
- un monochromateur (14) capable de réfléchir vers les formations géologiques les seuls neutrons qui ont une énergie de valeur déterminée ($E_{0a}$, $E_{0c}$), et
- des moyens de détection adaptés à produire un signal de mesure représentatif du flux de neutrons diffusés par les formations géologiques et dont l'énergie ($E_{1a}$, $E_{1c}$) diffère de ladite énergie de valeur déterminée ($E_{0a}$, $E_{0c}$) d'une quantité d'énergie transférée ($\Delta E_a$, $\Delta E_c$).

17. Dispositif selon la revendication 16 caractérisé en ce que ladite source (13) comporte un émetteur de neutrons (13a) et un thermaliseur (13d) qui, à la réception des neutrons émis par l'émetteur (13a), produit un flux de neutrons ayant une énergie plus faible.

18. Dispositif selon la revendication 17, caractérisé en ce que ledit émetteur de neutrons (13a) est un émetteur en californium 252 et en ce que ledit thermaliseur (13d) est composé d'oxyde de deutérium.

19. Dispositif selon la revendication 17, caractérisé en ce que lesdits moyens de détection comportent un analyseur (15) et un détecteur (16) de neutrons, l'analyseur (15) étant adapté à réfléchir vers le détecteur (16) les neutrons diffusés par les formations géologiques dont l'énergie ($E_{1a}$, $E_{1c}$), diffère de ladite énergie de valeur déterminée ($E_{0a}$, $E_{0c}$) d'une quantité d'énergie transférée ($\Delta E_a$, $\Delta E_c$).

20. Dispositif selon la revendication 17, caractérisé en ce que lesdits moyens de détection comportent un filtre (23) et un détecteur de neutrons (16), le filtre (23) étant adapté à ne laisser passer en direction du détecteur (16) que les neutrons diffusés par les formations géologiques dont l'énergie ($E_{1a}$, $E_{1c}$) est sensiblement égale à ladite valeur d'énergie déterminée ($E_{0a}$, $E_{0c}$) modifiée de la quantité d'énergie transférée ($\Delta E_a$, $\Delta E_c$).

21. Dispositif selon la revendication 19, caractérisé en ce que ledit monochromateur (14) et ledit analyseur (15) sont constitués par des cristaux taillés selon un plan déterminé et respectivement placés par rapport à ladite source (13) et audit détecteur (16) dans des positions permettant une réflexion de Bragg suivant un angle déterminé.

22. Dispositif selon la revendication 21, caractérisé en ce que chacun desdits cristaux est mobile autour d'un axe permettant la modification de l'angle de réflexion de Bragg.

23. Dispositif selon une des revendications 20 à 22, caractérisé en ce que ladite source (13) émet ses neutrons dans une direction sensiblement perpendiculaire à l'axe de la sonde.

24. Dispositif selon une des revendications 20 à 22, caractérisé en ce que ladite source (13) émet ses neutrons dans une direction sensiblement parallèle à l'axe de la sonde.

25. Dispositif selon une des revendications 23 ou 24, utilisé pour obtenir des informations relatives à une matière susceptible d'être contenue dans les formations et pour laquelle on connaît au moins une valeur de référence d'énergie transférée lors de l'interaction des neutrons avec cette même matière, caractérisée en ce qu'il comporte au moins:

- une première cellule de mesure émettant et détectant des neutrons dont l'énergie est sensiblement déterminée,

- une seconde cellule de mesure émettant et détectant des neutrons dont l'énergie a une valeur pour laquelle ledit spectre de diffusion de la matière ne révèle pratiquement pas d'absorption d'énergie.

26. Dispositif selon la revendication 25 comportant des moyens de traitement des signaux délivrés par les deux cellules de mesure, caractérisé en ce que ces moyens de traitement comportent un circuit differentiel délivrant un signal proportionnel à la différence des signaux délivrés par les cellules de mesure et un circuit comparateur délivrant un signal significatif de la présence de la matière recherchée dans les formations géologiques lorsque le signal délivré par le circuit différentiel est supérieur à une valeur seuil prédéterminée.

27. Dispositif selon l'une des revendications 16 à 26 caractérisé en ce que ladite cellule est portée par un patin de mesure adapté à venir en contact avec les formations géologiques pendant les mesures.

28. Dispositif selon l'une des revendications 16 à 27, caractérisé en ce qu'il comporte au moins un détecteur (25) adapté à mesurer au moins l'un des flux ayant une énergie déterminée émis vers les formations.

29. Dispositif selon l'une des revendications 16 à 28, caractérisé en ce qu'il comporte au moins un détecteur (26) adapté à mesurer le flux diffusé par la formation.

**Patentansprüche**

1. Verfahren zur Ermittlung von Informationen, die wenigstens ein in geologischen Informationen enthaltenes Material betreffen und wonach man:

- einen Teil dieser geologischen Formationen wenigstens einem Strom sog. auftreffender Neutronen mit einer im wesentlichen bestimmten Energie aussetzt,

- wenigstens teilweise das unelastische inkohärente Diffusionsspektrum der gestreuten Neutronen aufstellt, das aus der Wechselwirkung der auftreffenden Neutronen mit diesem Teil dieser geologischen Formationen resultiert, und

- aus diesem Spektrum gewisse der Energiemengen ableitet, welche häufig zwischen den auftreffenden Neutronen und Molekülen der Materialien übertragen werden, die in diesem Teil dieser Formationen enthalten sind oder umgekehrt.

2. Verfahren nach Anspruch 1, dadurch gekennzeichnet, daß dieser von diesem Teil dieser Formationen gestreute Gesamtfluß, zurückgeführt auf den auftreffenden Neutronenstrom, die Ableitung von diese Formationen betreffenden Informationen gestattet.

3. Verfahren nach einem der vorhergehenden Ansprüche, dadurch gekennzeichnet, daß nur die Übertragungsvorgänge negativer Energie in Betracht gezogen werden, d.h. die, die einem Energieverlust der auftreffenden Neutronen entsprechen.

4. Verfahren nach einem der vorhergehenden Ansprüche, dadurch gekennzeichnet, daß man diesen Teil dieser geologischen Formationen mehreren auftreffenden Neutronenströmen aussetzt, von denen ein jeder über eine im wesentlichen festgesetzte Energie verfügt.

5. Verfahren nach einem der Ansprüche 1 bis 4, dadurch gekennzeichnet, daß man von wenigstens einer Menge, der sogenannten Bezugsmenge, mit wenigstens einem Wert übertragener Energie Kenntnis erlangt, wobei diese Menge charakteristisch für wenigstens eine der gesuchten Informationen betreffend in den geologischen Formationen enthaltener Stoffe ist und daß man diese Information bestimmt, indem man aus dem spektrum übertragene Energiewerte ableitet, die im wesentlichen gleich den Werten der Bezugsmenge sind.

6. Verfahren nach Anspruch 5, dadurch gekennzeichnet, daß die Bezugsmenge wenigstens einen Wert der übertragenen Energie benachbart 175 meV oder 370 meV umfaßt.

7. Verfahren nach Anspruch 5, dadurch gekennzeichnet, daß man ein Meßsignal erzeugt, das repräsentativ für den Neutronenstrom entsprechend wenigstens übertragener Energiewerte der Bezugsmenge erzeugt.

8. Verfahren nach Anspruch 7, dadurch gekennzeichnet, daß man jeweils den Wert dieser Signale mit vorbestimmten Schwellenwerten vergleicht und daß man ein Signal erzeugt, welches signifikant für die durch die Bezugsmenge charakterisierte Information ist, wenn die Werte dieser Meßsignale jeweils größer als die dieser schwellenwerte sind.

9. Verfahren nach Anspruch 8, dadurch gekennzeichnet, daß man diese Signale als Funktion des Niveaus der Bohrung, wo die Messungen vorgenommen werden, aufzeichnet.

10. Verfahren nach einem der vorhergehenden Ansprüche, dadurch gekennzeichnet, daß wenigstens eine der gesuchten Informationen das Vorhandensein wenigstens eines Stoffs in den geologischen Formationen betrifft.

11. Verfahren nach einem der Ansprüche 1 bis 4, dadurch gekennzeichnet, daß man die Stärke der Peaks des Spektrums entsprechend den verschiedenen Übertragenen Energiemengen mißt.

12. Verfahren nach Anspruch 11, dadurch gekennzeichnet, daß man Kenntnis von wenigstens einer sog. Bezugsmenge mit wenigstens einem Wert der übertragenen Energie erhält, wobei diese Menge sowie die Größe der entsprechenden Peaks des Spektrums entsprechend wenigstens gewissen Werten dieser Bezugsmenge charakteristisch für wenigstens eine der nachgesuchten Informationen betreffend Stoffen ist, die in den geologischen Formationen enthalten sind und daß man die nachgesuchte Information durch Vergleich der effektiv übertragenen Energiewerte mit der der Bezugsmenge und durch Studium der Größe der Peaks des Spektrums entsprechend wenigstens gewissen der übertragenen Energiewerte ableitet.

13. Verfahren nach einem der Ansprüche 11 oder 12, dadurch gekennzeichnet, daß wenigstens eine der nachgesuchten Informationen das Vorhandensein und/oder den Gehalt wenigstens eines Materials in der geologischen Formation betrifft.

14. Verfahren nach einem der Ansprüche 11 oder 12, dadurch gekennzeichnet, daß wenigstens eine der nachgesuchten Informationen das Vorhandensein von mehreren Stoffen in den geologischen Formationen sowie deren relativen Gehalt betrifft.

15. Verfahren nach einem der vorhergehenden Ansprüche, dadurch gekennzeichnet, daß das Niveau der bestimmten Energie eines Stroms auftreffender Neutronen geringfügig größer als der größte Wert der übertragenen negativen Energien ist, d.b. als der größte Energieverlust der auftreffenden Neutronen, die dieser Fluß zu ermitteln getastet hat, ist.

16. Vorrichtung zur Ermittlung gewisser Informationen betreffend wenigstens ein Material, das in geologischen, von einer Bohrung durchsetzten Formationen enthalten ist, wobei die Vorrichtung eine Sonde umfaßt, die in die Bohrung eingeführt werden kann und am Ende eines Betätigungskabels befestigt ist und mit Einrichtungen zur Übertragung der von der Sonde gelieferten Signale und mit wenigstens einer Meßzelle ($9_a$, $9_c$), umfassend:

- eine Quelle (13), die in der Lage ist, einen Neutronenstrom zu erzeugen,

- einen Monochromator (14), der in der Lage ist, gegen die geologischen Formationen allein die Neutronen zu reflektieren, die eine Energie bestimmten Wertes ($E_{0a}$, $E_{0c}$) haben, und

- Ermittlungseinrichtungen, die so ausgelegt sind, daß sie ein Meßsignal erzeugen, welches repräsentativ für den Fluß oder Strom von Neutronen ist, die durch die geologischen Formationen gestreut werden und deren Energie ($E_{1a}$, $E_{1c}$) sich von dieser Energie bestimmten Wertes ($E_{0a}$, $E_{0c}$) um eine Menge übertragener Energie ($\Delta E_a$, $\Delta E_c$) unterscheidet.

17. Vorrichtung nach Anspruch 16, dadurch gekennzeichnet, daß die Quelle (13) einen Neutronenemitter (13a) und einen Thermalisator (13d) umfaßt, der bei Empfang der durch den Emitter (13a) ausgesandten Neutronen einen Neutronenstrom mit einer geringeren Energie erzeugt.

18. Vorrichtung nach Anspruch 17, dadurch gekennzeichnet, daß dieser Neutronenermitter (13a) ein Kalifornium-252-Emitter ist und daß dieser Thermalisator bzw. Neutronenabbremser (13d) aus Deuteriumoxid besteht.

19. Vorrichtung nach Anspruch 17, dadurch gekennzeichnet, daß diese Ermittlungseinrichtungen einen Analysator (15) und einen Detektor (16) für Neutronen umfassen, wobei der Analysator (15) so ausgelegt ist, daß er gegen den Detektor (16) die Neutronen reflektiert, die von den geologischen Formationen gestreut wurden, deren Energie ($E_{1a}$, $E_{1c}$) sich von der Energie bestimmten Wertes ($E_{0a}$, $E_{0c}$) um eine Menge übertragener Energie ($\Delta E_a$, $\Delta E_c$) unterscheidet.

20. Vorrichtung nach Anspruch 17, dadurch gekennzeichnet, daß diese Detektoreinrichtungen ein Filter (23) sowie einen Neutronendetektor (16) umfassen, wobei das Filter (23) so ausgelegt ist, daß es in Richtung auf den Detektor (16) nur die von den geologischen Formationen gestreuten Neutronen passieren läßt, deren Energie ($E_{1a}$, $E_{1c}$) im wesentlichen gleich diesem festgelegten Energiewert ($E_{0a}$, $E_c$), modifiziert um die Menge übertragener Energie ($\Delta E_a$, $\Delta E_c$) ist.

21. Vorrichtung nach Anspruch 19, dadurch gekennzeichnet, daß dieser Monochromator (14) und dieser Analysator (15) durch Kristalle gebildet sind, die längs einer festgelegten Ebene geschliffen bzw. geschnitten sind und jeweils bezüglich dieser Quelle (13) und dieses Detektors (16) in Stellungen angeordnet sind, welche eine Braggsche Reflexion längs eines festgelegten Winkels ermöglichen.

22. Vorrichtung nach Anspruch 21, dadurch gekennzeichnet, daß jeder dieser Kristalle um eine Achse beweglich ist, die die Modifikation des Braggschen Reflexionswinkels gestattet.

23. Vorrichtung nach einem der Ansprüche 20 bis 22, dadurch gekennzeichnet, daß diese Quelle (13) ihre Neutronen in einer Richtung im wesentlichen senkrecht zur Achse der Sonde aussendet.

24. Vorrichtung nach Anspruch 20 bis 22, dadurch gekennzeichnet, daß diese Quelle (13) ihre Neutronen in einer Richtung im wesentlichen parallel zur Achse der Sonde aussendet.

25. Vorrichtung nach einem der Ansprüche 23 oder 24, anwendbar zum Erhalt von Informationen, die sich auf einen Stoff beziehen, der möglicherweise in den Formationen enthalten ist und für den man wenigstens einen Bezugswert übertragener Energie bei der Wechselwirkung der Neutronen mit diesem Stoff oder Material kennt, dadurch gekennzeichnet, daß sie wenigstens umfaßt:

- eine erste Meßzelle, welche Neutronen aussendet und ermittelt, deren Energie im wesentlichen bestimmt ist,

- eine zweite Meßzelle, welche Neutronen aussendet und ermittelt, deren Energie einen Wert hat, für den dieses Diffusions- oder Streuspektrum für das Material praktisch keine Energieabsorption zeitigt.

26. Vorrichtung nach Anspruch 25, mit Verarbeitungseinrichtungen für durch die beiden Meßzellen gelieferte Signale, dadurch gekennzeichnet, daß diese Verarbeitungseinrichtungen einen Differentialkreis, der ein Signal proportional zur Differenz der von den Meßzellen gelieferten Signalen liefert und einen Komparatorkreis umfassen, der ein Signal liefert, welches signifikant für das Vorhandensein des gesuchten Materials in den geologischen Formationen ist, wenn das vom Differentialkreis gelieferte Signal größer als ein vorbestimmter schwellenwert ist.

27. Vorrichtung nach einem der Ansprüche 16 bis 26, dadurch gekennzeichnet, daß die Zelle von einem Meßschuh getragen wird, der so ausgebildet ist, daß er in Kontakt mit den geologischen Formationen während den Messungen kommt.

28. Vorrichtung nach einem der Ansprüche 16 bis 27, dadurch gekennzeichnet, daß sie wenigstens einen Detektor (25) umfaßt, der so ausgelegt ist, daß er wenigstens einen der Stöme mißt, der eine vorbestimmte gegen die Formationen ausgesandte Energie hat.

29. Vorrichtung nach einem der Ansprüche 16 bis 28, dadurch gekennzeichnet, daß sie wenigstens einen Detektor (26) umfaßt, der so ausgelegt ist, daß er den von der Formation gestreuten Strom mißt.

## Claims

1. A method for obtaining information about at least one substance contained in geological formations and according to which:
- one part of said geological formations is subjected to at least one flux of so-called incident neutrons having a substantially determined energy level,
- the incoherent inelastic spectrum of diffusion of the diffused neutrons resulting from the interaction of the incident neutrons with said part of said geological formations is established at least in part, and
- this spectrum is used to deduce certain of the quantities of energy frequently transferred between the incident neutrons and molecules of the substances contained in said part of said formations, or vice-versa.

2. A method as in claim 1, characterized in that the total flux diffused by said part of said formations related to the flux of incident neutrons makes it possible to deduce information about said formations.

3. A method as in one of the preceding claims, characterized in that account is only taken of the negative transfers of energy, i.e. those corresponding to a loss of energy of the incident neutrons.

4. A method as in one of the preceding claims, characterized in that said part of said geological formations is subjected to a plurality of fluxes of incident neutrons each of which has a substantially determined energy level.

5. A method as in one of claims 1 to 4, characterized in that at least one so-called reference set is known comprising at least one transferred energy value, this set being characteristic of at least one of the items of information being sought about the substances contained in the geological formations, and in that said information is determined by using the spectrum to deduce transferred energy values substantially equal to the values of the reference set.

6. A method as in claim 5 characterized in that the reference set comprises at least one transferred energy value close to 175 meV or 370 meV.

7. A method as in claim 5, characterized in that a measurement signal is produced representative of the flux of neutrons corresponding to at least transferred energy values of the reference set.

8. A method as in claim 7, characterized in that the value of said signals is compared respectively with pre-determined thresholds, and in that a signal is produced indicative of the information characterized by said reference set when the values of said measurement signals are respectively greater than those of said thresholds.

9. A method as in claim 8, characterized in that said signals are recorded as a function of the level in the borehole at which the measurements are made.

10. A method as in one of the preceding claims, characterized in that at least one of the items of information being sought concerns the presence of at least one substance in the geological formations.

11. A method as in one of claims 1 to 4, characterized in that the intensity of the peaks of the spectrum corresponding to the different quantities of energy transferred is measured.

12. A method as in claim 11, characterized in that at least one so-called reference set is known comprising at least one transferred energy value, this set and the intensity of the peaks of the spectrum corresponding to at least certain values of said reference set being characteristic of at least one of the items of information being sought about substances contained in the geological formations, and in that the information being sought is deduced by comparing values of energy effectively transferred with that of the reference set and by studying the intensity of the peaks of the spectrum corresponding to at least certain of the values of energy effectively transferred.

13. A method as in one of claims 11 or 12, characterized in that at least one of the items of information being sought concerns the presence and/or the proportion of at least one substance in the geological formation.

14. A method as in one of claims 11 or 12, characterized in that at least one of the items of information being sought concerns the presence of a plurality of substances in the geological formations and their relative proportion.

15. A method as in one of the preceding claims, characterized in that the determined energy level of a flux of incident neutrons is slightly higher than the greatest value of the transferred negative energy levels, i.e. than the greatest loss of energy of the incident neutrons which this flux is supposed to detect.

16. A device for obtaining certain information about at least one substance contained in geological formations crossed by a borehole, this device comprising a probe which can be introduced into the borehole, fixed to the end of an operating cable and means for transmitting the signals supplied by the probe and comprising at least one measuring cell ($9_a$, $9_c$) comprising:
- a source (13) capable of producing a flux of neutrons,
- a monochromator (14) capable of reflecting only those neutrons having a determined energy value ($E_{0a}$, $E_{0c}$) towards the geological formations, and
- detecting means adapted to produce a measurement signal representative of the flux of neutrons diffused by the geological formations and the energy ($E_{1a}$, $E_{1c}$) of which differs from said determined energy value ($E_{0a}$, $E_{0c}$) by a transferred quantity of energy ($\Delta E_a$, $\Delta E_c$).

17. A device as in claim 16 characterized in that said source (13) comprising a neutron emitter (13a) and a thermalizer (13d) which, on receiving the neutrons emitted by the emitter (13a), produces a flux of neutrons having a lower energy level.

18. A device as in claim 17 characterized in that said neutron emitter (13a) is a californium 252 emitter and in that said thermalizer (13d) is composed of deuterium oxide.

19. A device as in claim 17, characterized in that said detecting means comprise an analyzer (15) and detector (16) for neutrons, the analyzer (15) being adapted to reflect towards the detector (16) the neutrons diffused by the geological formations the energy ($E_{1a}$, $E_{1c}$) of "hich differs from said determined energy value ($E_{0a}$, $E_{0c}$) by a transferred quantity of energy ($\Delta E_a$, $\Delta E_c$).

20. A device as in claim 17, characterized in that said detecting means comprise a filter (23) and a neutron detector (16) the filter (23) being adapted to only let pass in the direction of the detector (16) the neutrons diffused by the geological formations the energy ($E_{1a}$, $E_{1c}$) of which is substantially equal to said determined energy value ($E_{0a}$, $E_{0c}$) modified by the quantity of energy transferred ($\Delta E_a$, $\Delta E_c$).

21. A device as in claim 19, characterized in that said monochromator (14) and said analyzer (15) are constituted by crystals cut in a determined plane and placed respectively in relation to said source (13) and to said detector (16) in positions permitting a Bragg reflection at a determined angle.

22. A device as in claim 21, characterized in that each of said crystals can move about an axis permitting the modification of the angle of Bragg reflection.

23. A device as in one of claims 20 to 22, characterized in that said source (13) emits its neutrons in a direction substantially perpendicular to the axis of the probe.

24. A device as in one of claims 20 to 22, characterized in that said source (13) emits its neutrons in a direction substantially parallel with the axis of the probe.

25. A device as in one of claims 23 or 24, used to obtain information about a substance likely to be contained in the formations and for which at least one reference value is known for the energy transferred when the neutrons interact with this same substance, characterized in that it comprises at least:
- one first measuring cell emitting and detecting neutrons the energy of which is substantially determined,
- one second measuring cell emitting and detecting neutrons the energy of which has a value for which said diffusion spectrum of the substance shows practically no energy absorbtion.

26. A device as in claim 25, comprising means for processing the signals supplied by the two measuring cells, characterized in that these processing means comprise a differential circuit supplying a signal proportional to the difference of the signals supplied by the measuring cells and a comparator circuit supplying a signal indicative of the presence of the substance being sought in the geological formations when the signal supplied by the differential circuit is greater than a pre-determined threshold value.

27. A device as in one of claims 16 to 26, characterized in that said cell is carried by a measuring pad adapted to come into contact with the geological formations during the measurements.

28. A device as in one of claims 16 to 27, characterized in that it comprises at least one detector (25) adapted to measure at least one of the fluxes having a determined energy emitted towards the formations.

29. A device as in one of claims 16 to 28, characterized in that it comprises at least one detector (26) adapted to measure the flux diffused by the formation.

**FIG.1A**

**FIG.1B**

**FIG.2**

**FIG.3**

1

FIG.4

FIG.6

FIG.5

**FIG.7**

**FIG.8**

**FIG.9**